# EUROPEAN PATENT SPECIFICATION

(11) **EP 1 623 551 B1**
(45) Date of publication and mention of the grant of the patent: **17.01.2007**
(21) Application number: 03725187.3
(22) Date of filing: 12.05.2003
(51) Int. Cl.: H04L 29/06

(54) **NETWORK SECURITY METHOD AND SYSTEM**
VERFAHREN UND VORRICHTUNG ZUR NETZWERKSICHERHEIT
PROCEDE ET SYSTEME DE SECURITE DE RESEAU

(43) Date of publication of application: 08.02.2006
(73) Proprietor: NTT DoCoMo, Inc., Tokyo 100-6150 (JP)
(72) Inventor: WALTER, Thomas, 80935 Munich (DE)
(74) Representative: HOFFMANN EITLE
(86) International application number: PCT/EP2003/004941
(87) International publication number: WO 2004/100487

(56) References cited:
- SCHNEIER, BRUCE: "Applied Cryptography" 1996 , JOHN WILEY & SONS, INC. , NEW YORK XP002255888 ISBN: 0-471-12845-7 page 58 -page 59
- NEEDHAM R M ET AL: "Using encryption for authentication in large networks of computers" COMMUNICATIONS OF THE ASSOCIATION FOR COMPUTING MACHINERY, ASSOCIATION FOR COMPUTING MACHINERY. NEW YORK, US, vol. 21, no. 12, December 1978 (1978-12), pages 993-999, XP002163714 ISSN: 0001-0782
- R.M. NEEDHAM, M.D. SCHROEDER: "Authentication Revisited" ACM SIGOPS OPERATING SYSTEMS REVIEW, [Online] vol. 21, no. 1, January 1987 (1987-01), page 7 XP002256195 ISSN: 0163-5980 Retrieved from the Internet: <URL:http://delivery.acm.org/10.1145/30000 /24593/p7-needham.pdf?key1=24593&key2=0786 294601&coll=GUIDE&dl=ACM&CFID=12584491&CFT OKEN=19860377> [retrieved on 2003-09-30]

## Description

### Field of the present invention

The present invention relates to communications between a resource and external entities.

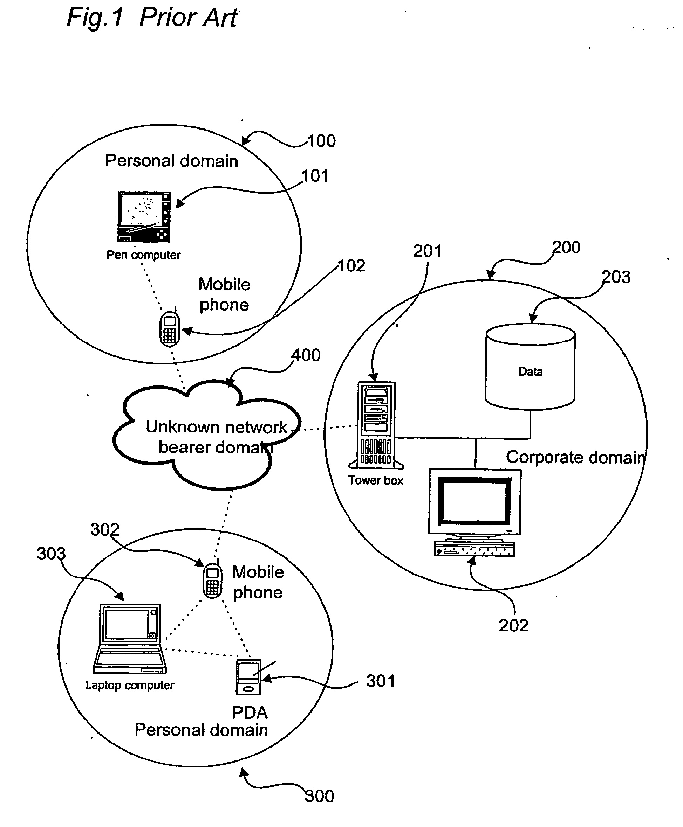

External users are equipped with an increasing number of devices. While performing their business tasks, users do not use merely a single device, but any feasible combination which best fits their needs. Figure 1 shows a graphical representation of this scenario. As seen from the corporate domain 200's point of view, the private domain 100 and personal domain,300 can be seen as trusted environments whereas the bearer domain 400 may be an untrusted, or trusted domain.

Advanced distributed applications are based on multi-tier architectures where several servers are involved in transaction processing, which originate from (remote) clients. Up to now, clients have been integrated into the corporate network domain 200 or, if located remotely, have been connected using one or a combination of alternatives such as dial-in connections, the Internet, virtual private networks (VPN), or Internet security IPsec.

With wireless technologies mobility of users and devices 101,102, 301,302, 303 has become possible relative to each other and to the corporate network 200, so that a solution for secure, potentially, mobile applications permitting access to corporate network resources 201,202, 203 is desirable.

It is therefore necessary to consider the available authentication mechanisms, and the degree to which they may be appropriate to this environment.

### Discussion of Prior art

Authentication is a process that runs between entities which can be either humans, machines or processes.
Entities exchange data in order to establish the identity of one another.

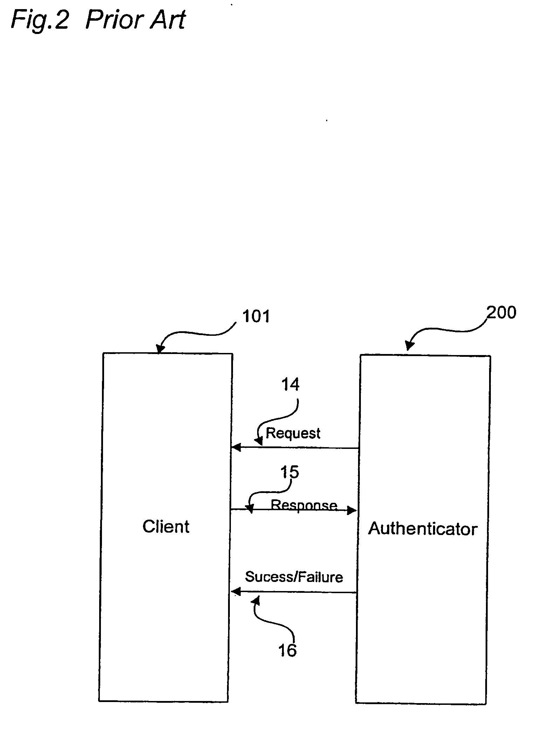

The sequence of actions of a typical authentication protocol is shown in figure 2. This is taken from the Point to Point (PPP) Extensible Authentication Protocol (EAP). EAP defines an authentication protocol for communication between peers over point-to-point links. Basically, the authenticator 200 requests a proof of identity from the Client 101. This proof may be for instance, simply a one-time-password or some challenge-response type authentication, or a complex protocol like EAP TLS (transport layer security) protocol which performs negotiation as well as distribution of session keys. A request for authentication 14 is sent from authenticator 200 to peer or client 101. The peer 101 sends a response 15 back which in turn is validated by the authenticator 200. Based on the outcome of the validation a positive or negative feedback 16 is provided to the client 101.

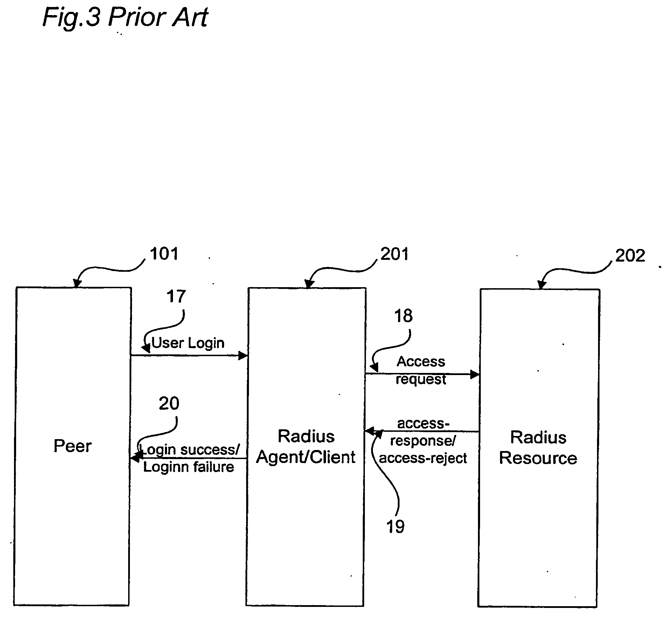

The RADIUS protocol as shown in figure 3 is an indirect authentication scheme, in that authentication is run against a central server 202 which stores respective identity data for every known communicating entity.

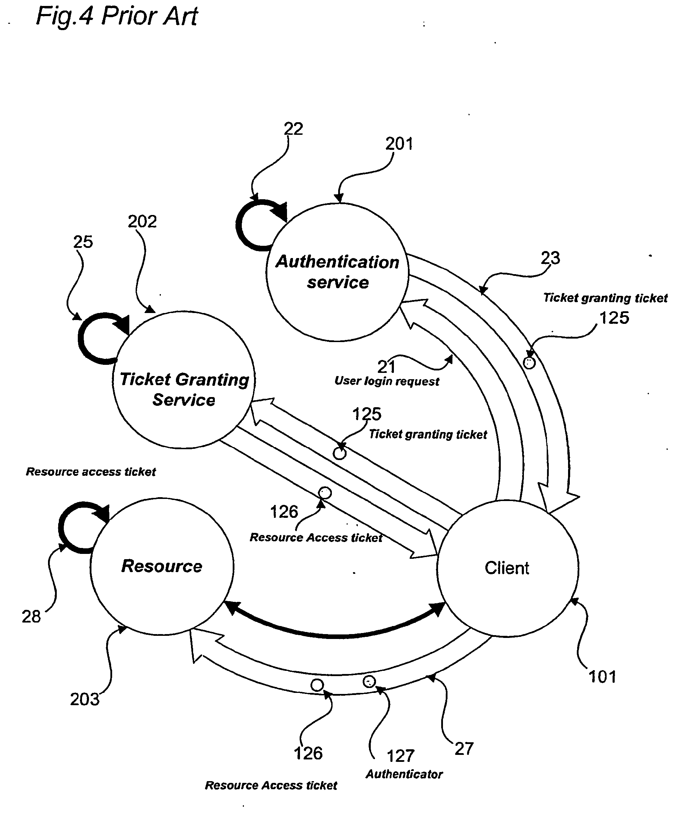

Similarly to RADIUS, Kerberos as shown in Fig. 4 is an indirect authentication scheme. Kerberos authenticates users and provides authorization on a per service basis.

As part of the authentication process data is generated - called a ticket - which enables the holder to authenticate with other entities. The authentication protocol runs in two steps: Firstly, an entity authenticates with a Kerberos server which verifies the identity of the entity and returns a so-called ticket-granting ticket 125 Secondly, if an entity later wishes to access a specific resource 203 then it uses the previously issued ticket-granting ticket 125 to request another server called ticket-granting service - to issue a resource specific ticket 126. With this ticket the entity creates a so-called authenticator 127 and sends this and the resource specific ticket 126 to the server hosting the resource to authenticate itself and to access the resource 203.

In Kerberos, while performing the authentication process, session keys are generated by the Kerberos server and distributed as part of the generated tickets. These session keys are used to encrypt data before it is sent and which is then decrypted at the receiving site using the same key. All involved parties share common knowledge of the encryption key applied.

Another quite commonly used approach is to employ public-key cryptography. Public-key cryptography can be used to build systems such as the RSA algorithm which can be used for encryption and decryption. It is also suitable for digital signature as well as key exchange. Public-key cryptography uses a pair of keys - the public and private keys. Either key can be used for encryption and respective decryption. Initially, key pairs are generated; the private key is stored with the entity and the public key is made known to third parties. A common approach to perform the latter, is using a public key infrastructure (PKI). A PKI centers around the concept of a certificate. Simply speaking a certificate is a proof of identity. A certificate contains among other entity specific data the entity's public key. Certificates are generally signed by trusted third-parties known as certification authorities (CA). Signing is done with the private key of the CA. If an entity would like to authenticate with another entity it uses its certificate. With the public key of the CA the called entity validates the calling entity's certificate. It is assumed that entities hold certificates of CA for the mentioned purpose. In addition to having authenticated the communicating entity, its public key can be used to encrypt data for confidentiality if sent over a public network; in particular, to exchange session keys.

Certificates are not the only approach to provide entities with an identity. An approach known as self-delegation exists which introduces the concept of primary and secondary key pairs. The idea is that primary key pairs are kept secret and secondary key pairs are transferred to un-trusted devices. Secondary key pairs come with delegation certificates which are signed with the primary private key and which state that any proof of identity with the secondary key pair should be regarded as strong as if done with the primary key pair.

The system is designed such that with every self-delegation only a limited amount of secret information is disclosed. Limited information so that no benefit can be taken from its knowledge. On the other hand, propagation of self-delegations is controlled in a way that after a certain number of delegations an enemy can efficiently compute the primary private key.

The above described scenario gives rise to certain new requirements: firstly with respect to an appropriate technology to provide the user with basic network connectivity, and secondly with respect to access control to the corporate network domain, and thirdly with respect to confidentiality, integrity and accountability of data transmitted between mobile devices and corporate network.

The requirements for secure mobile distributed applications to above discussed technologies will now be considered. In particular, the mechanisms to be provided must support
- authentication between mobile client devices and between mobile client devices and corporate network. Mutual authentication is required so that every involved party has evidence that the communicating peer is the assumed entity.
- establishment of secure end-to-end communication links between all involved entities; i.e. between mobile devices and between mobile devices and a corporate network, to provide confidentiality and integrity of exchanged messages, and
- non-repudiation or accountability of communication events, as a protection against false denial of involvement in a communication.

While EAP, RADIUS, Kerberos, PKI and Delegation all support multiple clients, EAP, RADIUS and Kerberos do not allow for mutual authentication between a client and server, while delegation is not necessarily designed to support such a function. None of the discussed technologies supports mutual authentication between different clients. Delegation, PKI and Kerberos all support Key negotiation, and if PPP EAP TLS comes into effect then this function will also be supported in EAP, although certificates such as used in PKI will be required. None of the discussed methods make any provision for data integrity, although in EAP, Kerberos and PKI, data integrity is not an issue as a hash function can readily being used. Message authentication is required however, and additional effort in the distribution of keying data must also be taken into account. Finally only Public Key Cryptography (PKC) and Delegation satisfactorily handle non-repudiation. In the case of Kerberos, session keys are not meant to be used for non-repudiation as both communicating entities hold the same key and thus can mimic the other entity's identity.

Schneier Bruce "Applied Cryptography" 1996, John Wiley & Sons, Inc. New York XP002255888 ISBN; 0-471-12845-7 refers to basic protocols for establishing secure connection between two entities using symmetric cryptography. Various steps of the Needham-Schroeder protocol are described. In one example, in a first step (1) a participant A sends a message to a security device (Trent) consisting of A's (Alice) name, another participant's name B (Bob), and a random number. Then, (2) the security device generates a random session key and encrypts a message with the random session key and A's name with a secret key the security device shares with participant B. Then A's random value, B's name, the key and the encrypted message are encrypted with the secret key the security device shares with participant A. The encrypted message is transmitted to A. In a step (3) A decrypts the message and extracts the key. Then A sends B the message the security device encrypted in its key. (4) B decrypts the message and extracts the key and generates another random value and encrypts the message with the key and sends it to A. (5) A decrypts the message and generates another encrypted message to B, allowing B in a step (6) to decrypt the message and to verify it.

Needham R. M. et al: "Using encryption for authentication in large networks of computers" Communications of the Association for Computing Machinery, New York, US, vol. 21. No. 12, December 1978 (1978-12), pages 993-999, XP002163714 ISSN: 0001-0782 refers to encryption for authentication in large networks of computers and discusses the establishment of authenticated interactive communications between two principals, authenticated one-way communication and signed communications, where the original of a communication and the integrity of the content can be authenticated for a third party.

### Summary of the invention

It is therefore an object of the invention to provide improved methods, systems and devices for establishing secure communications and a secure data network, over those known in the prior art.

This object of the invention is solved by the subject matter of the independent claims. Advantageous embodiments are outlined in the dependent claims.

In one example a method of establishing secure network communications between a client and a resource, comprises the steps of:
- Establishing a trust relationship between a security manager and the client.
- Generating a first identifier 124 at the security manager and transmitting the identifier to the client from the security manager.
- transmitting the first identifier 124 from the client to the resource.
- Establishing the viability of the first identifier 124 at the resource; transmitting first encryption data 131 from the resource to the client.
- Carrying out further network communications 12 between the client and the resource using the first encryption data 131.

A communications network for secure network communications between a client and a resource comprises,
- a client, provided with a first client mediator and a second client mediator;
- a resource, provided with a first resource mediator and a second resource mediator; and
- a security manager for generating a first identifier, and for transmitting it to the second client mediator.

Where the second client mediator and the second resource mediator are adapted to establish a relationship between the client and the resource.

The adaptations to the second client mediator comprise the second client mediator being adapted to:
- receive the first identifier 124 from the security manager.
- transmit the first identifier 124 to the resource for validation.
- receive first encryption data 131 from the resource.
- carry out secure network communications 12 with the resource using the first encryption data 131.

The adaptations to the second resource mediator comprise the' second resource mediator being adapted to:
- establish the viability of the first identifier.
- transmit the first encryption 131 data to the client.
- carry out further network communications 12 with the client using the first encryption data 131.

According to another example, a security manager for establishing secure communications in a network is adapted to generate a first identifier 124, and to transmit the first identifier 124 to a second client mediator incorporated in a client for interpretation. The first identifier is so generated as to provoke said second client mediator to retransmit said first identifier to a second resource mediator. The first identifier is further so generated as to provoke said second resource mediator
- to initiate a validation process 9 to validate said first identifier,
- to transmit first encryption data 131 to the second client mediator, and
- to carry out further network communications 12 with the resource using the first encryption data 131.

According to another example a client provided with a first client mediator and a second client mediator is adapted to enter into secure communications with a resource. The client is adapted to establish a trust relationship with a security manager by the action of the first client mediator. The second client mediator, and a second resource mediator incorporated in a resource, are adapted to establish a relationship between the client and the resource.

The adaptations to the second client mediator comprise the second client mediator being adapted to:
- receive a first identifier 124 generated by a security manager, from the security manager.
- receive first encryption data 131 from the resource.
- carry out further network communications 12 with the resource using the first encryption data 131.

The adaptations to the second resource mediator comprise the second resource mediator being adapted to:
- establish the viability of the first identifier 124.
- transmit first encryption data 131 to the client at the resource.
- carry out further network communications 12 with the client using the first encryption data.

According to another example a resource is adapted to establish a trust relationship with the security manager by the action of the first resource mediator. The second resource mediator is adapted to:
- establish the validity of a first identifier 124 generated by the security manager, transmitted to the client and forwarded to the resource.
- transmit first encryption data 131 to the client at the resource.
- carry out further network communications 12 with the client using the first encryption data.

### Brief description of the drawings

For better understanding of the invention, and to show how the same may be carried into effect, reference will now be made by way of example, to the accompanying drawings, in which:
- Fig. 1: exemplifies the mobile distributed application environments.
- Fig. 2: shows a first prior art network authentication process.
- Fig. 3: shows a second prior art network authentication process.
- Fig. 4: shows a third prior art network authentication process.
- Fig. 5: shows a method of establishing secure network communications between a client device and a resource according to a first embodiment of the present invention.
- Fig. 6: shows a method of establishing secure network communications between a client device and a resource according to a second embodiment of the present invention.
- Fig. 7: shows a method of establishing secure network communications between a client device and a resource according to a third embodiment of the present invention.
- Fig. 8: shows a method of establishing secure network communications between a client device and a resource according to a fourth embodiment of the present invention.
- Fig. 9: shows a method of establishing secure network communications between a client device and a resource according to a fifth embodiment of the present invention.
- Fig. 10: shows further details of the resource of the present invention according to an embodiment.
- Fig. 11: shows further details of the secure manager of the present invention according to an embodiment.
- Fig. 12: shows further details of the client device of the present invention according to an embodiment.
- Fig. 13: shows a method of establishing secure network communications between a client device and a resource according to a sixth embodiment of the present invention. And,
- Fig. 14: shows a method of establishing secure network communications between a client device and a resource according a further development of the embodiment of figure 13.

### Detailed description of the preferred embodiments

The present invention is particularly suited to the establishment of secure communications between a resource and external clients, such as mobile clients. The resource may be a software application, stored or otherwise accessible via an application server. As discussed above with reference to figure 1, a typical environment in which the present invention may be put into effect may comprise a resource 201 in a private network, to which an external user wishes to gain access by means of one of a variety of network client devices 301, 302, 303 to which that user may have access, i.e. in his personal domain 300. The resource may comprise an element of a private network 200, for example a server 201, possibly controlling access to a part of the network 202, 203. The resource may be a given piece of data 203 at a server, or distributed over a network. End-systems in the personal domain of an external user may range from smart cards to mobile phones to laptops. There are clear differences between devices in terms of CPU power, memory, display sizes etc. At the lower extreme in this regard we have smart cards etc., while a laptop may be considered to be at the top end. On the other hand, more flexible systems may be more vulnerable to security threats and attacks. It may well be that the external user is a mobile user, whose devices may be connected to each other by wireless means, or via wireline/wired channels, optical channels, or any of the many communications channel types that would readily occur to the skilled person, or any combination thereof. Some or all of the devices may also be provided with means for communication directly with the private network or with the private network via a public network 400, such as the Internet for example. This communication may also be by wireless or via wireline/wired channels, optical channels, or any of the many communications channel types that would readily occur to the skilled person, or any combination thereof. Whenever connections may be used, it is assumed that an end-to-end connection is established prior to the initiation of authentication protocol, or may otherwise be established without interfering with the process.

External users such as employees have the choice of many external devices as execution environments for distributed applications. It might be reasonable to use a laptop in order to update large spreadsheets whereas another application, checking a work assignment, may only require a mobile phone to access the respective data in the private network.

The following terms are used throughout the description. The following explanations are offered by way of example.

Authorization violation: An entity uses a resource it is not intended to use.

Accountability: It should be possible to identify the entity responsible for any communication event.

Authentication: The process of performing identity verification of either a human or a device or an application.

Availability: Applications, devices and services should be available and function correctly.

Bearer device: A mobile devices which physically hosts the security manager.

Certificate: Set of user credential validated by a trusted third party (certification authority) and protected against forgery.

Client federation: Any number of client devices that have authenticated with a. security manager and that are capable to exchange data over secured channels.

Confidentiality: Data transmitted or stored should only be revealed to an intended audience.

Controlled access: Only authorized entities should be able to access certain services or data.

Data integrity: Any modifications of data should be detectable.

Denial of communication acts (repudiation): An entity falsely denies its participation in an event such as any transaction or communication event.

Eavesdropping: An entity reads data it is not intended to read.

Forgery of data: An entity creates new data in the name of another entity.

Loss or modification of data: An entity can detect that in a sequence of received data packets one or several packets are missed; an entity can detect that a received data packet or parts of it have been altered.

Masquerade: An entity claims to be another entity.

According to embodiments of the present invention, secure communications are established between a set of external client devices and a resource, for example a server in a private network, by authenticating client devices among one another, and with the resource and distributing encryption data such as encryption keys between authenticated clients and the authenticated clients and the resource. In particular, a security manager is provided to act as a intermediary between the various external devices and the resource, and preferably to guarantee that no unauthorized device or device that is forged, has been tampered with or has been otherwise compromised takes part in the communication. The resulting secured client domain is referred to as a client federation. The security manager may be integrated into a client device, or otherwise have a network communication capacity of its own.

From the company's point of view, that is, the owner of the resource, the security manager and the user credentials stored therein may be the only trusted elements in the personal domain of an external user. In order to establish secure end-to-end connections between individual client devices as well as between client devices and corporate network, the security manager fulfils the functions of authenticating client devices, issuing credentials for client devices which can be used in the authentication with the private or corporate network, and performing key generation and data signing. Although the present invention is generally described in terms of communications involving one client, a security manager and a server, the skilled person will appreciate that the present invention applies equally to communications involving any number of client devices.

As a preliminary step, the external user preferably identifies himself as a legitimate user to the security manager, for example by entering secret information into a user interface, e.g. by typing a correct pass phrase (PIN or password) into a device hosting the security manager, which activates the security manager.

Client devices may further identify themselves to other client devices and to elements of the private network, e.g. a corporate domain, such as a private server and/or other resources. These resources may be located in the private domain or network as described below.

As discussed above, it is desirable that certain security requirements be satisfied in the environment of the present invention. These include the server 201, which may fulfill the role of an application server, having evidence of the identity of communicating peers or client entities. This is referred to as authentication. This access to resources should preferably be granted based on a proper authentication mechanism otherwise known as authorization. In other words, access to a resource is preferably granted to authenticated entities only. Finally, every communication event should preferably be accounted for, so that they can be traced back. This is known as nonrepudiation.

To authenticate the client the resource first initiates authentication by sending an authentication request to the client device. This request is forwarded to the security manager associated with the client.

The security manager enters into network communication, for example using the communication functions of a host or bearer device in which it may be incorporated or otherwise associated with such as a mobile phone, to request a pass phrase from the user. This code could be a PIN or a password. If the pass phrase is successfully verified, the security manager continues with the authentication procedure. This may in fact take place whenever the host device, in which the security manager is incorporated is powered on.

The security manager sends back an authentication response with an identifier of its own, such as its own certificate as a parameter. This identifier is preferably issued by the owner of the resource. This identifier may itself be encrypted, for example with a public key of the security manager, or with the public key of the client. This Public key may further be included in the identifier. The resource verifies the received identifier certification, generates a session key, such as the session host's public key and returns it to the host or bearer device. In other words, an authentication confirmation is transmitted.

If mutual authentication is required, the resource can send its own identifier, such as its certificate with either the first authentication request or the authentication confirmation. The host or bearer device should be able to verify the identifier of the resource using the preinstalled identifiers of certification authorities.

This scenario can be extended by adding a separate client device, e.g. a laptop. In the same way as described above, the security manager is hosted by way of example in a mobile phone. Authentication as well as key negotiation and exchange now is performed for both mobile devices in order to establish eventually secure end-to-end (E2E) connections.

It is assumed that the client device holds an identifier issued by the same company responsible for the security manager host client device and the security manager.

In the client federation of trusted security manager and client device, the security manager simply ensures that the laptop is the legitimate holder of the certificate. For instance, a server in a private network such as a corporate network accepts only certificates which are validated, i.e., signed, by the security manager.

The situation where the client carries a third-party identifier will now be considered. It is the responsibility of the security manager to verify not only that the identifier is valid, i.e., that it belongs to the entity, but also to verify that the client and the identifier are bound to each other. Finally, the security manager has to prove to the resource that the client is trustworthy.

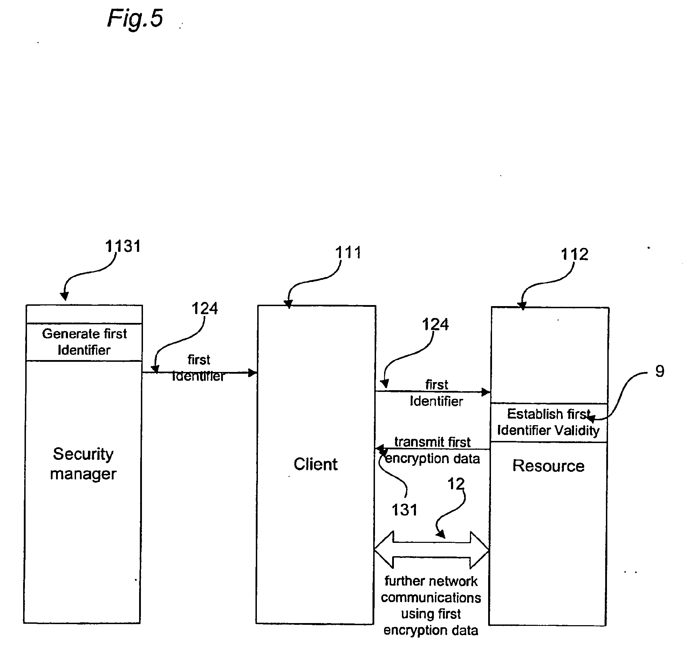

In the following an embodiment of the invention will be described with regard to Fig. 5.

Fig. 5 shows a method of establishing secure network communications between a client device and a resource according to a first embodiment of the present invention.

According to this method, there is provided a client 111, and a resource 112. The client is distributed in one or more external devices and takes the role of a peer or client, as described with reference to the prior art. The second network entity is a server or resource, situated for example in a private network as described above, with which said client may interact, so as to receive data therefrom. Although network entities such as security manager, resource, server etc. will be referred to throughout the description, these terms may encompass a large amount of ancillary hardware, software etc. allowing the device referred to to perform its tasks as described in the invention, and any other desired activities. In particular, the server or resource may in fact comprise an entire private e.g. corporate network.

According to this embodiment, there is further provided a security manager 1131. The security manager is preferably a tamper-resistant device that can store credentials and cryptographic keys and can perform encryption and decryption operations, as well as preferably carrying out key generation and data signing.

The first network entity or client 111 and the security manager host device 113 may each comprise any element capable of network activity, implemented in software, hardware or any combination of the two. Preferably the first network entity or client and the manager host device are each a standalone network device, including suitable firmware and software, for example a personal computer, and particularly a laptop computer, a telephone, and particularly a mobile telephone, a pager, a personal digital assistant (PDA) or any other device capable of network communications. According to one embodiment, the first network entity 111 or client device may comprise a laptop computer having means to establish network communications, and the manager host device 1131 a mobile telephone. The security manager or device 1131 may comprise for example a SIM card, a smart card, a specialized silicon chip, a customizable chip or memory device containing appropriate data, or a software routine adapted to carry out the embodiment as appropriate, or any of the various other techniques that will regularly occur to the skilled person.

A resource is further provided, and may comprise a private network or domain such as a corporate network, or any other network entity, i.e. any element capable of network activity as described above, with which secure communication is required.

The first network entity or client and the manager host device may connect to a mobile cellular telecommunications network such as GSM (Global System for Mobile Communication), GPRS (General Packed Radio System) or 3G (Universal Mobile Telecommunications System), or any other wireless or wireline communications system as will readily occur to the skilled person, or move into a wireless hotspot, e. g., WLAN (Wireless LAN). Since it can be assumed that every network technology has its own authentication and security scheme (if at all) and some of the schemes in use are outside the control of the private domain, the only feasible solution to enable secure mobile distributed applications is that all required security mechanisms being supported by the private or corporate domain and being applicable within the private or corporate network as well as between mobile devices and private domain.

According to this embodiment, this security manager is adapted to generate a first identifier, which may take the role of a temporary certificate, and to transmit it, possibly by means of the network systems of the manager host device into which said security manager or manager is integrated, to said first network entity or client. The first network entity or client is adapted to receive this first identifier from the security manager, and to retransmit it to the resource. This resource is adapted to receive this first identifier, and to establish the validity of this identifier. This validation process may include for example steps of determining that the identifier received did indeed originate at said security manager, and that it confers upon said client an entitlement to access to said resource.

Where such validity is established, the resource 112 is further adapted to transmit first encryption data to said client. This first encryption data may comprise a session key, or other data enabling encrypted or otherwise secure communication. Where the' first identifier is a temporary certificate, it is preferably encrypted for example using the public key of the security manager 1131, or with the client's public key in which case it can be decrypted with the security manager's private key or client's private key, respectively. Communications can then ensue between said client and resource, using said first encryption data. In practice, the client and manager host device may both be electronic devices used by an external user who wishes to access data on said. second network entity or resource 112 by means of said client.

A trust relationship is thus established between the client 111 and security manager 113, on the basis of which the security manager 113 is authorized to provide the client 111 with the first identifier 124, instructing the resource to provide the first network entity or client 111 with the first encryption data 131, and to enter into secure communications on the basis of said encryption data 131 thereafter.

Thus the client 111 is only able to enter into secure communications with the resource, when authorized to do so by said security manager 1131. Thus, establishing a trust relationship between client and resource.

Thus the invention relates to a method of establishing secure network communications between a client and a resource, comprising the steps of: Establishing a trust relationship between a security manager and the client, generating a first identifier 124 at the security manager and transmitting the identifier to the client from the security manager, transmitting the first identifier 124 from the client to the resource, establishing the validity of the first identifier 124 at the resource; transmitting first encryption data 131 from the resource to the client, and carrying out further network communications 12 between the client and the resource using the first encryption data 131.

As a development of this method, the step of establishing a trust relationship between the security manager and the client comprises the further steps of: transmitting a second identifier 123 associated with the client from the client to the security manager; and establishing the validity of the second identifier 123 at the security manager.

As a further development of this method, it may comprise the further step of establishing a trust relationship between the resource and the security manager prior to generating the first identifier.

As a still further development of this method, the step of establishing a trust relationship between the resource and security manager may comprise the further steps of transmitting a third identifier 122 associated with a security manager from the security manager to the resource; and establishing the validity of the third identifier 122 at the resource.

As a further development of this method, the step of establishing a trust relationship. between the resource and security manager may comprise the further steps of transmitting a second encryption data 132 associated with the resource from the resource to the security manager, and carrying out further network communications 11 between the resource and the security manager using the second encryption data 132.

As a further development of this method, the step of establishing a trust relationship between the resource and security manager may comprise the further steps of transmitting a fourth identifier 121 associated with the resource from the resource to the security manager; and establishing the validity of the fourth identifier 121 at the security manager.

As a further development of this method, at least one of the steps of establishing a trust relationship between the resource and the security manager, establishing a trust. relationship between the security manager and the client, and establishing a trust relationship between the client and the resource may be repeated.

As a further development of this method, the repetition of the at least one step may be carried out at predetermined intervals or at random intervals.

The invention may also be described in terms of a communications network for secure network communications between a client and a resource comprising, a client, provided with a first client mediator and a second client mediator; a resource, provided with a first resource mediator and a second resource mediator; and a security manager for generating a first identifier, and for transmitting it to the second client mediator.

Where the second client mediator and the second resource mediator are. adapted to establish a relationship between. the client and the resource.

The adaptations to the second client mediator comprise the second client mediator being adapted to: receive the first identifier 124 from the security manager, transmit the first identifier 124 to the resource for validation, receive first encryption data 131 from the resource, and carry out secure network communications 12 with the resource using the first encryption data 131.

The adaptations to the second resource mediator comprise the second resource mediator being adapted to: establish the validity of the first identifier, transmit the first encryption 131 data to the client, and carry out further network communications 12 with the client using the first encryption data 131.

This procedure is applicable in scenarios where users require access by means of distributed applications to a corporate network, where said.users utilizes any number of mobile devices, and where access to a corporate network from any mobile device in use must be secure. In other words, a set of devices and private network mutually authenticate, that session keys are distributed between that set of devices and private network, and that at least one entity holds a private key to perform data signing. The present invention is well suited for example to a business-to-employee scenario.

This solution addresses weaknesses in the prior art in setting up trust among all involved parties communicating over a network that may not be trusted so that the corporate network has evidence about the identities of all entities involved in any communication event, such as a business transaction. Likewise, all mobile client devices of a distinct set of devices have evidence about the identity of every other mobile device in that set and about the identity of the corporate domain. Messages exchanged between mobile devices and between mobile devices and network are also protected against eavesdropping and modification (including loss), and all communication events can be accounted for non-repudiation.

The method is applicable in an environment where the number and type of client devices is not known in advance and where the communication network between mobile devices and between mobile devices and corporate network may not be trusted.

Optionally, encryption of the first encryption data 131 with the public key of the security manager may be introduced to give the security manager (and indirectly the resource) an additional level of security, as at the time of sending the first encryption data it is required that the client federation is still in operation before the client can make use of the first encryption data.

In order to ensure that security manager and client are still in a federation, authentication of the security manager and client and client and resource may be repeated at predetermined or random times. On this basis, the possibility that a client device may access confidential corporate data without being integrated into a federation can be disregarded.

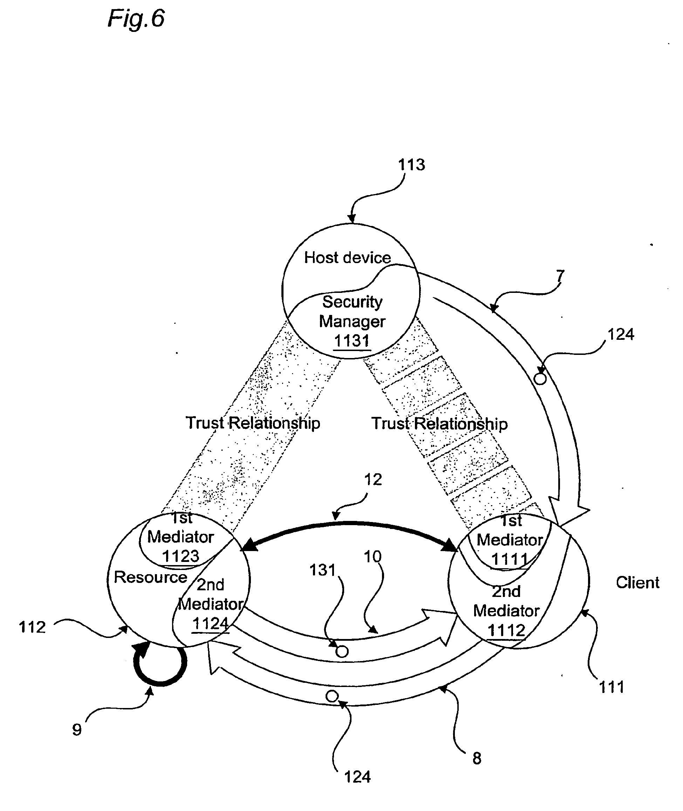

Figure 6 shows a method of establishing secure network communications between a client device and a resource according to a second embodiment of the present invention.

According to the embodiment of the present invention shown in Fig. 6, which is a further development of the above described embodiment, the first network entity or client 111 is provided with a first client mediator 1111 and a second client mediator 1112, and said second network entity or resource 112 is provided with a first resource mediator 1123 and a second resource mediator 1124. These mediators may be implemented by means of hardware, firmware or software, or any combination of the three.

This first client mediator 1111 is adapted to interact with the security manager 1131, so as to establish the trust relationship between the first network entity or client 111, and the manager host device comprising a security manager 113. The second client mediator 1112 is adapted to receive said first identifier 124 from the security manager 1131, and to pass it on to the second resource mediator 1124 at the second network entity or resource 112. A process 9 is then carried out at the resource, of validating the first identifier 124, as discussed above. If the first identifier 124 is found to be valid, the second resource mediator then forwards the first encryption data 131 to the second client mediator 1112 of the client 111 in a message 10. The second client mediator 1112 then begins secure communications 12 with the second resource mediator of the resource using said first encryption data 131.

The secure nature of the secure unit 1131 of the manager host device 113 means that there can exist a trust relationship between the security managers and the second network entity or resource. In other words, where the first identifier 124 can be identified as originating at such a trusted secure unit 1131, the resource 112 can safely enter into communication with the client 111 on the basis of the known trust relationship between the resource and the security manager 1131, and the trust relationship between the client 111 and the security manager 1131 assumed under the current invention.

The security manager is preferably tamper-resistant and may be used to store user credentials. The security manager is preferably integrated into a bearer device or manager host device. Communication links may be established between the different mobile devices, i.e. the bearer device and client device. These devices may further be provided with software components for password input.

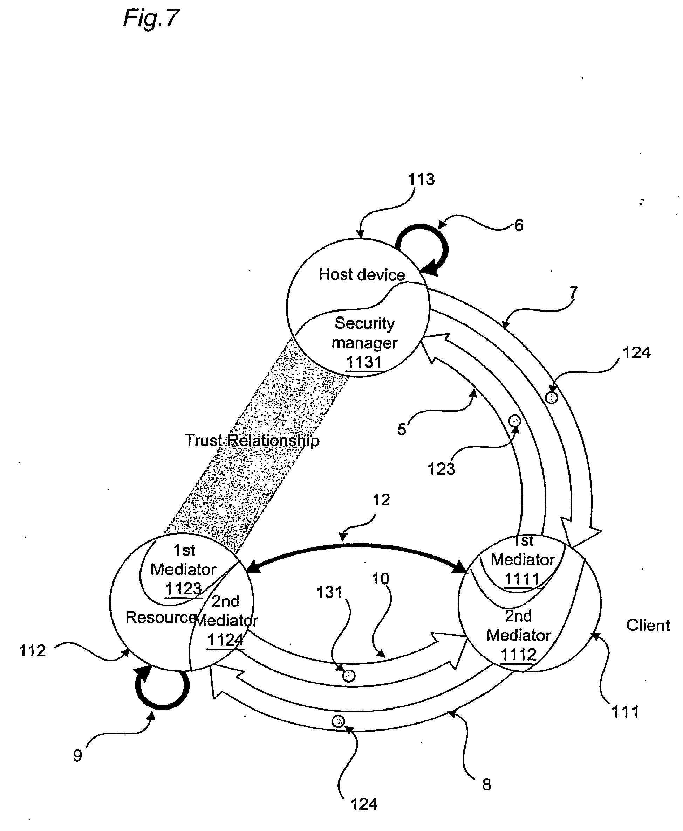

Fig. 7 shows a second method of establishing secure network communications between a client device and a resource according to a third embodiment of the present invention.

Fig 7, which is a further development of the above described embodiments, shows in further detail how the trust relationship discussed above is established between the client 111 and the manager host device 113, by means of the first client mediator 1111 and security manager 1131, respectively. The first client mediator 1111 sends a second identifier 123 in a message 5 to the security manager 1131 of the manager host device 113. A processing step 6 is performed at the security manager 1131, to establish the validity of the second identifier 123. If the second identifier 123 is found to be valid, i.e. to be representative of an eligible client device, a first identifier 124 is generated at the security manager 1131. This identifier 124 is preferably a temporary certificate, authorising the clients access to the server. This first identifier 124 is transmitted in a message 7 to the client device. The client device then forwards this first identifier to the server in a message 8. The server carries out a validation process 9 upon this first identifier. This validation process may include for example steps of determining that the identifier received did indeed originate at said security manager, and that it confers upon said client an entitlement to access said resource. If this validation process 9 is successful, the server 112 generates first encryption data 131, such as a session key or other data enabling encrypted or otherwise secure communication, and sends it to the client device in a message 10. This first encryption data is preferably encrypted with the public key of the first identifier 124, where the first identifier is a certificate.

A secure channel 12 can then be established between the client device and the server, so that for example access to the private network is made available. This is established on the basis that the server 112 trusts the security manager 1131 of the manager host device, which in turn is able to establish a trust relationship with the client 111, so that on receipt of the first identifier 124 at the server 112 from the client 111 the server or resource 112 knows that the client 111 can also be trusted. It is on this basis that the second network entity or resource 112 returns the first encryption data 131 to the first network entity or client 111.

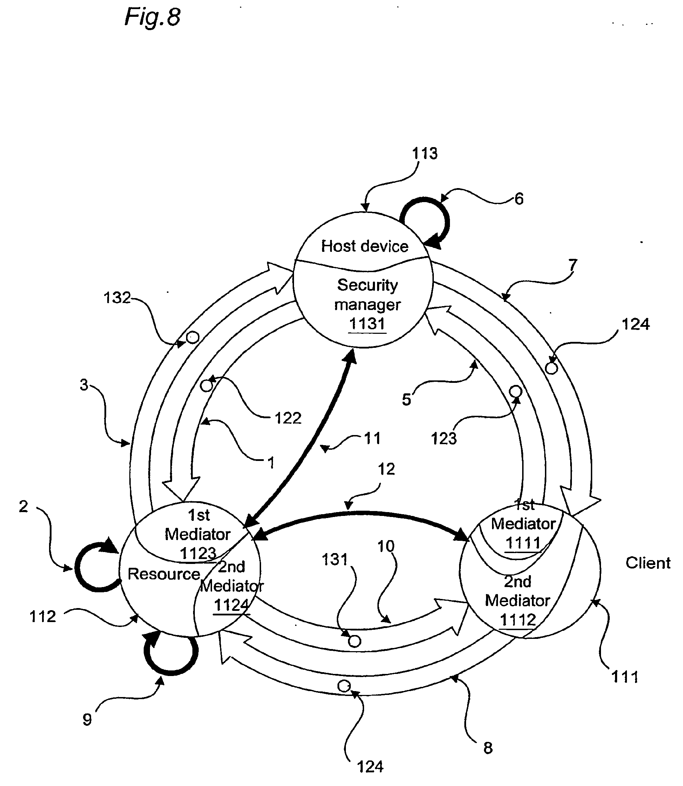

Fig. 8 shows a method of establishing secure network communications between a client device and a resource according to a fourth embodiment of the present invention.

In this figure, which is a further development of the above-described embodiments, it is shown in further detail how a trust relationship may be established between the resource 112 and security manager 1131 of the manager host device 113. According to this embodiment, a third identifier 122 is transmitted from the security manager 1131 to the first resource mediator 1123 of the resource 112. This third identifier 122 may comprise for example a certificate issued by the resource 112. The first resource mediator 1123 receives this third identifier 122, and at the processing step 2 determines the validity of the third identifier 122. If the third identifier 122 is found to be valid, i.e. to have been issued by an entity entitled to the trust of the second network entity or resource. The first resource mediator of the second network entity or resource 112, returns second encryption data 132 to the security manager 1131 of the manager host device 113. The security manager 1131 may then enter into secure communications 11 with the resource 112.

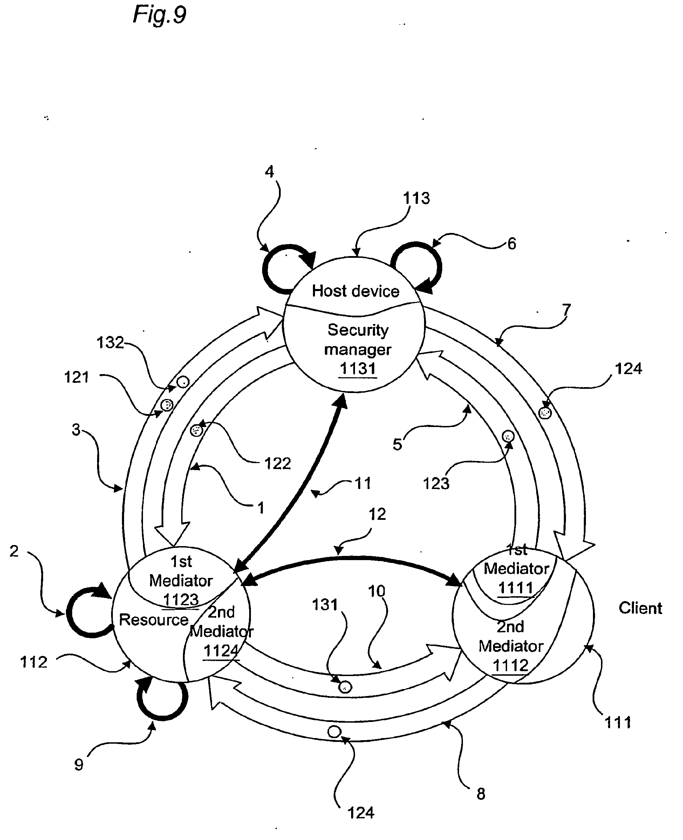

Fig. 9 shows a method of establishing secure network communications between a client device and a resource according to a fifth embodiment of the present invention.

According to this embodiment, which is a further development of the above described embodiments, the first resource mediator 1123 of the resource 112 may further be adapted to transmit to said security manager 1131 a fourth identifier 121. A processing step 4 may then be carried out at the security manager 1131, to establish the validity of this fourth identifier, so that a mutual trust relationship may be established prior to the commencement of secure communications 11. This fourth identifier may be a certificate of the resource.

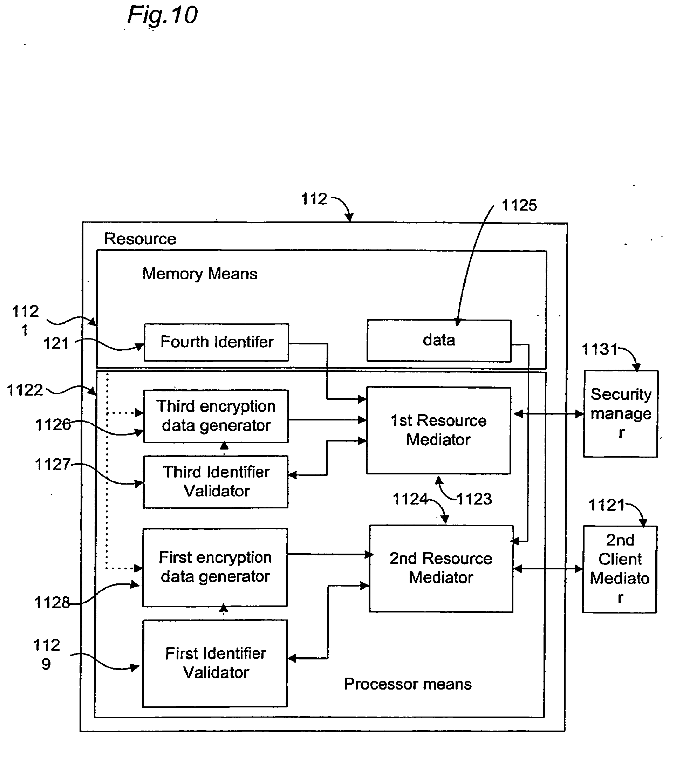

Fig. 10 shows further details of the resource of the present invention according to an embodiment.

According to this embodiment, the resource 112 comprises memory means 1121 and processor means 1122. In fact, the resource may comprise an extensive data network, having many separate elements having processing functions, memory functions or combinations of both, in addition to various other functions. The components of the resource of the present invention may thus be distributed over a number of separate elements. The resource 112 of the present invention will also comprise means for communicating at least with the client of the present invention (not shown). The memory means 1121 stores the fourth identifier 121, which may be a certificate of the resource. The - memory means 1121 also stores the data 1125, to which the client 111 attempts to gain access according to the present invention. This data may in fact comprise static data, application data, a stream of communication data, data derived by processing data originating from the client of from within the resource, or any of the multitude of resources to which an external client may desire access. The processor 1122 comprises a first mediator 1123, and a second mediator 1124. This first resource mediator 1123 is in external communication with the security manager 1131, possibly by means of the common communications means belonging to the resource as mentioned above (not shown). The first resource mediator 1123 is further in communication with a second encryption data generator 1126, and a third identifier validator 1127. The third identifier validator 1127 may in accordance with the present invention receive the third identifier 122 from the security manager 1131, and determine the validity thereof. The third identifier validator 1127 is coupled to the second encryption generator 1126, so as to cause the generation and issue by said second encryption data generator 1126 of the second encryption data 132, for transmission back to the security manager 1126, along with the fourth identifier 121 as stored in the memory means 1121. The second encryption data generator may further be coupled to the memory means 1121, in order to generate the second encryption data 132 based on information stored therein.

The second resource mediator 1124 is in external communication with a second client mediator 1121, possibly by means of the common communications means belonging to the resource as mentioned above (not shown). The second resource mediator 1124 is further in communication with a first encryption data generator 1128, and a first identifier validator 1129. The first identifier validator 1129 may in accordance with the present invention receive the first identifier 124 from the second client mediator, and determine the validity thereof. The first identifier validator 1129 is coupled to the first encryption generator 1128, so as to cause the generation and issue by said first encryption data generator 1128 of the first encryption data 131, for transmission back to the second client mediator 1121. The first encryption data generator may further be coupled to the memory means 1121, in order to generate the first encryption data 131 based on information stored therein.

The present invention is thus embodied in a resource adapted to enter into secure communications in a network, the resource being adapted to establish a trust relationship with the security manager by the action of the first resource mediator. The second resource mediator is adapted to: establish the validity of a first identifier 124 generated by the security manager, transmitted to the client and forwarded to the resource; transmit first encryption data 131 to the client at the resource; carry out further network communications 12 with the client using the first encryption data.

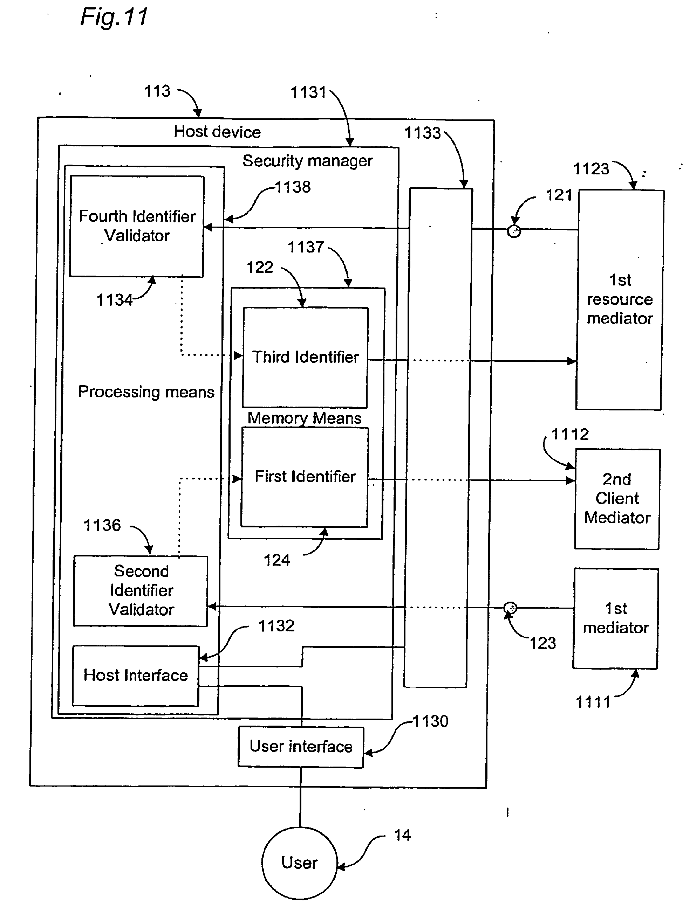

Fig. 11 shows further details of the secure manager of the present invention according to an embodiment.

As shown in Fig. 11, there is provided a manager host device 113, into which is integrated the security manager 1131. The security manager itself may incorporate processing means 1138, memory means 1137 and other functional elements as required to carry out the tasks assigned to the security manager as discussed herein. As shown in Fig. 11, the security manager comprises a fourth identity validator 1134, and a second identity validator, for establishing the validity of the fourth identifier as submitted by the first resource mediator, and the second identifier as submitted by the first client mediator, respectively. These validation processes are the validation process 4 and the validation process 6 referred to above. These functions are performed substantially by the processing means 1138. The security manager 1131 is further adapted to submit a third identifier 122 and a first identifier 124 or first identifier instruction to the first resource mediator and the second client mediator respectively. These identifiers may simply be stored in the memory means 1137, or generated in the processing means 1138, or may be generated in the processing means. on the basis of data stored in the memory means, or otherwise derived, for example from a real time clock.

As described above, the manager 113 comprises a security manager 1131. This security manager 1131 in turn comprises a processing means 1138 and a memory means 1137. The memory means and processing means may function together in the manner of a conventional computing system. The memory means 1137 may comprise any data storage device as will readily occur to the skilled person. For example, the memory means may comprise a hard drive, solid state memory, EPROM, etc. The memory means stores a third identifier 122 which may be a certificate issued by the second network entity or resource 112, and a first identifier 124, which is recognized as discussed above by the resource, as authorizing the issuing of encryption data 131 to the first network entity or client 111. The memory means 1137 can transfer the third identifier 122 and the first identifier 124 to the first resource mediator 1123 and the second client mediator 112, respectively, as discussed above. This transfer may be carried out under the guidance of the processing means 1138, via network communication means comprised in the manager host device (not shown). The processing means 1138 is further adapted to receive the fourth identifier from the first resource mediator, and the second identifier from the first client mediator, as discussed above, and to carry out a processing step 4 of validating the fourth network identifier, in a fourth identifier validator 1134, and a processing step 6 of validating the second identifier in a second identifier validator 1136. The fourth identifier validator is further configured so that once the validity of the fourth identifier is established, the third identifier 122 may be transmitted from the memory means 1137 to the first resource mediator 1123, as discussed above, so that mutual identification of the two devices is carried out. Similarly, the second identifier validator is configured so that once the validity of the second identifier is established, it causes the first identifier 124 to be transmitted from said memory means 1137 to said second client mediator 112, so that mutual identification of the two devices is carried out.

While the sequence of events may be as above, other sequences of events are possible.

The manager host device is optional to the present invention. Preferably however a manager host device is provided having communication means 1133 for communication with other client devices and with the resource, and with a user interface 1130 for communications with a user 14. The security manager may be provided with a host interface 1132 for controlling the manager host device so as to correctly pass on communications to or from the user, clients, resource etc. This host interface 1132 may be implemented in the processing means 1138.

The security device or security manager 1131 may store a private and public key-pair for asymmetric encryption, a session key for symmetric encryption, the mobile users own certificate, the necessary certificates of the issuing certificate authority (and possibly other entities), a personal identification number (PIN), a pass phrase or password to access and activate the security manager. The security device or security manager 1131 may also optionally store a revocation list of user certificates. The security manager may also provide the functions of performing all security related operations without exposing the private key to the outside of the security manager including generating private/public key pairs with an appropriate key generation process. It should allow the mobile user to manage his own list of certification authorities (CA) and certificates. It may also deal with the sending of certificates, the encryption of data with another entity's public key and the verification of the CA chain of another entity's certificate. These functions may alternatively be outsourced to a trusted client device of a defined security class. The security manager may incorporate a cryptographic pseudorandom number generator to create randomness, preferably XS.17, FIPS 186-2 compliant. Implementation of a real time clock is also preferable.

The first identifier or first identifier instruction 124 may comprise coding selected to cause the other elements of the network of the present invention, such as the resource 112 or client 111, to carry out their allotted tasks in accordance with the invention. This may involve the incorporation of instructions encoded in a format that may be directly interpreted by the respective elements, at a variety of implementation levels, i.e. from the generic low level code of the device itself, up to instructions only interpretable by a particular application running on that device.

All implemented functions as well as the user credentials of the security manager are preferably issued by a trusted entity. In a business-to-employee scenario the trusted entity may be the company itself.

The present invention is thus embodied in a security manager for establishing secure communications in a network, the security manager being adapted to generate a first identifier 124 or identifier instruction, and to transmit the first identifier 124 or identifier instruction to a second client mediator incorporated in a client for interpretation. The first identifier instruction is so generated as to provoke said second client mediator to retransmit said first identifier instruction to a second resource mediator.

The first identifier instruction is further so generated as to provoke said second resource mediator to initiate a validation process 9 to validate said first identifier instruction, to transmit first encryption data 131 to the second client mediator, and to carry out further network communications 12 with the resource using the first encryption data 131.

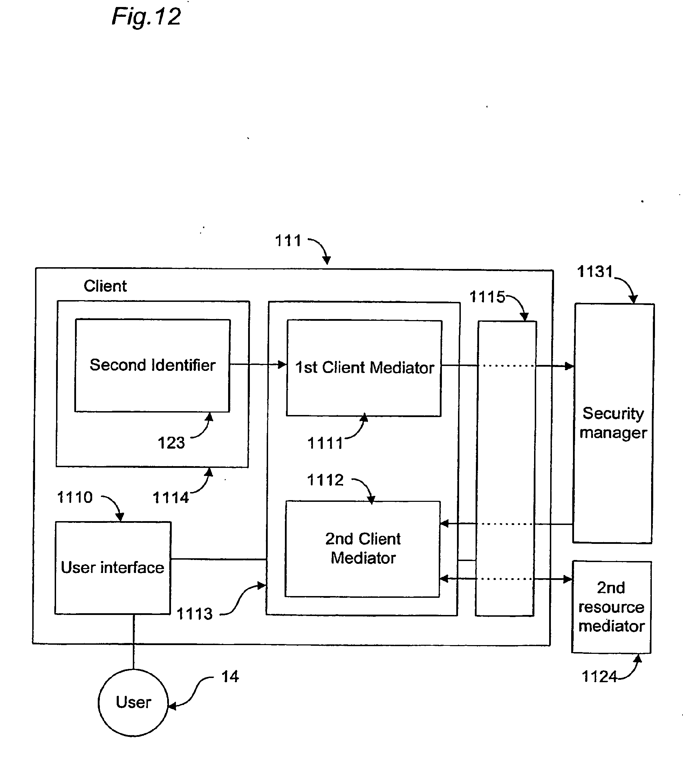

Fig. 12 shows further details of the client device of the present invention according to an embodiment. The client device 111 is preferably a conventional device, such as a laptop computer, mobile phone, PDA etc. as discussed above, configured or adapted so as to carry out the present invention. Accordingly, the client device111 is provided with memory means 1114, and processing means 1113. The Client device is provided with a first client mediator which interacts with the security manager 1131 as discussed herein, and a second client mediator which interacts with both the security manager 1131 and the second resource mediator 1124, as also described herein. The client device 111 is also preferably provided with a user interface 1110, for communication with a user 14. The client device 111 is also provided with communication means 1115, for communication with other clients, the security manager 1131 possibly via the intermediary of the manager host device 113 and the resource 112. The user interface 1110 and the communication means 1115 may be controlled by the processing means 1113.

The present invention is thus embodied in a client provided with a first client mediator and a second client mediator, the client being adapted to enter into secure communications with a resource. The client is adapted to establish a trust relationship with a security manager by the action of the first client mediator. The second client mediator, and a second resource mediator incorporated in a resource, are adapted to establish a relationship between the client and the resource.

The adaptations to the second client mediator comprise the second client mediator being adapted to: receive a first. identifier 124 generated by a security manager, from the security manager, receive first encryption data 131 from the resource and carry out further network communications 12 with the resource using the first encryption data 131.

The adaptations to the second resource mediator comprise the second resource mediator being adapted to: establish the validity of the first identifier 124, transmit first encryption data 131, and to carry out further network communications 12 with the client using the first encryption data.

According to a sixth embodiment, the security manager and the resource mutually authenticate each other and a session key is then generated and sent to security manager, as discussed above. The security manager and laptop then authenticate one another. The laptop initiates authentication by sending a respective request. This step is preferred since otherwise the corporate domain may not accept a connection request. The security manager, e. g. a smart card then verifies the identity of the laptop, or in other words validates the laptop's certificate, and issues a temporary certificate which is used by the laptop to authenticate with the corporate network. If the temporary certificate is recognized by corporate network, a session key is generated, encrypted under the public key of the security manager (or alternatively under public key of laptop) and is sent back to laptop.

Encryption of the session key with the public key of the security manager gives the security manager (and indirectly the corporate domain) an additional level of security, as at the time of sending the session key it is required that the client federation is still in operation before the mobile device can make use of the session key.

In order to ensure that security manager and laptop device are still in a federation, above authentication of security manager and laptop and laptop and corporate network is repeated at predetermined or random times. If this is made a general rule, we can exclude that a client device may access confidential corporate data without being integrated into a federation.

### Bootstrapping of client federation

For authentication, certificates, personal identification numbers (PINs) and passwords are all possible, depending on the nature of the device concerned. Certificates and PINs are particularly appropriate in the case of a security manager such as a smart card, while passwords, possibly in combination with a certificate, is envisaged in the case of a laptop or personal digital assistants(PDA). Certificates are either issued directly (company) or by a third party. This is significant when arbitrary devices such as laptops or PDAs are authenticated and integrated into a client federation.

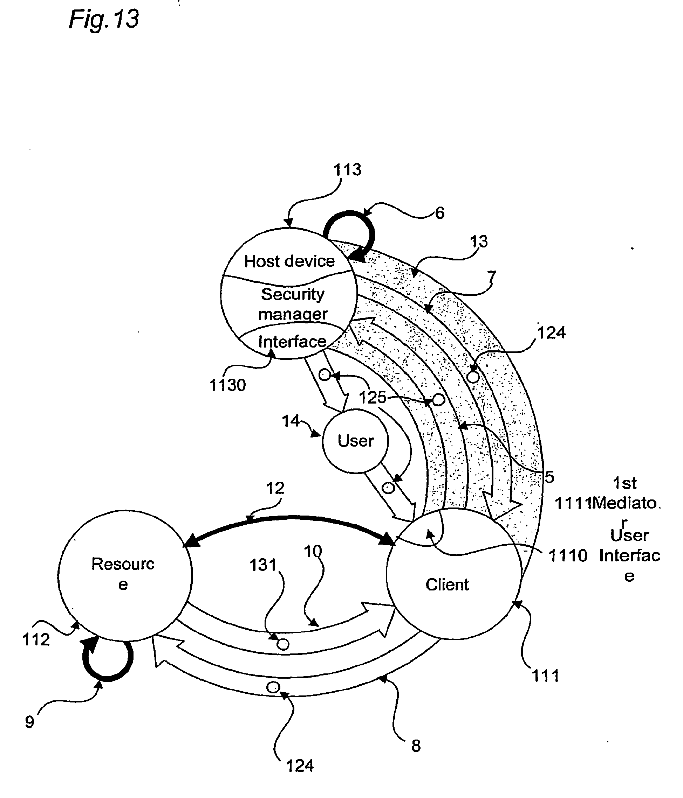

Fig. 13 shows a method of establishing secure network communications between a client device and a resource according to a seventh embodiment of the present invention.

The embodiments described above are sufficient when the external device joining a federation holds some data to identify itself. In some situations, however, such data is not available or is not suitable for use in authentication.

According to this embodiment, in which it is assumed that the security manager holds a valid set of credentials, credentials are generated and transferred to other external devices, i.e. the client device. This embodiment thus relates to bootstrapping a secure communication or "dynamic web-of-trust". The problems associated with such a task include pairing of security manager and client device over an insecure channel, and generation and transfer of user credentials.

This embodiment of the invention is based on the constraints that the security manager holds credentials and implements functions in order to perform cryptographic operations, e.g., key generation. Furthermore, security manager and possibly manager host device or bearer device (i.e., the mobile devices that runs the security manager), have to support an authentication and key negotiation and distribution protocol. A further constraint is that the external client device is able to perform symmetric and asymmetric encryption, it implements the same authentication and key management protocol as the security manager and bearer device, and it supports user identification using a password, PIN or pass phrases.

A preferably secure channel 13 is established between security manager 113 and the client device 111. The channel 13 can be rendered secure by any appropriate procedure as discussed with regard to the prior art, preferably one having results similar to the Internet Key Exchange protocol, Diffie-Hellman, Bluetooth device pairing and other protocols that will readily occur to the skilled person.

An identifier 125 such as a one-time password, PIN, code or phrase is given to a user 14 via a user interface 1130 of the manager host device 113, such as a display screen, audible prompt etc. The user 14 inputs the identifier 125, at a user interface 1110 of the client device 111. Then, the identifier 125 is sent back to the security manager 113 over the channel 13. Evidence is given thereby that the key negotiation and exchange protocol has indeed been executed by the bearer device and the mobile device.
A first identifier or set of credentials 124 such as a temporary certificate as described above are generated at the security manager 113.

This first identifier is then.transferred to the client device 111 in a message 7 over the channel 13. The client device then passes this first identifier 124 to the resource 112, in a message 8 in order to prove its identity.

The server carries out a validation process 9 upon this first identifier. This validation process may include for example steps of determining that the identifier received did indeed originate at said security manager, and that it confers upon said client an entitlement to access said resource. Where a key pair is transmitted, such transmission is preferably effected over a secure channel.

If this validation process 9 is successful, the server 112 generates first encryption data 131, such as a session key or other data enabling encrypted or otherwise secure communication, and sends it to the laptop in a message 10. This first encryption data is preferably encrypted with the public key of the first identifier 124, where the first identifier is a certificate.

A secure channel 12 can then be established between the client device and the server, so that for example access to the private network is made available.

Thus according to this embodiment of the invention at a step of establishing a trust relationship between the resource and the security manager the further steps of: establishing a channel between the security manager and an untrusted client, requesting input of user authentication information at the untrusted client, and validating the user authentication information at the security manager, may be carried out.

As a further development of this method, the channel is a secure channel and, the secure channel may be established using an Internet Key Exchange protocol, Diffie-Hellman, Bluetooth device pairing or other protocol that will readily occur to the skilled person.

As a further development of this method, the user authentication information is at least one of a security token, a one time password, PIN, code or phrase.

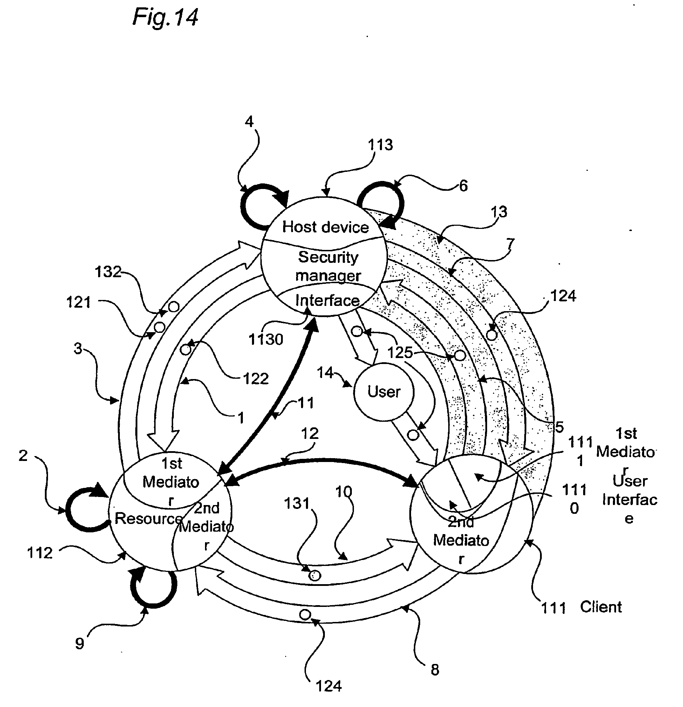

Fig. 14 shows a method of establishing secure network communications between a client device and a resource according a further development of the embodiment of figure 13.

According to this development, the features relating to the establishment of a trust relationship between the security manager 113 and the client 111, and between the security manager 113 and the resource 112, as described with regard to figure 9 are incorporated.

According to a ninth embodiment, the proposed method defines an authentication algorithm and protocol applicable for example to loosely coupled personal wireless mobile devices and between said devices and a private network such as a corporate network. In particular, certificates may be used as an instance of user credentials. According to the present invention a security manager takes care of the validation of authentication data, the generation and distribution of temporary authentication data among mobile devices, and the re-validation of temporary authentication data at predetermined or random intervals. The temporary authentication data can be used by any devices to access corporate network. This procedure ensures that mobile devices as seen by the private network can be equally trusted as devices in the private network itself.

According to a tenth embodiment, the procedure comprises the following steps: authentication of security manager and corporate network, authentication of different mobile devices with security manager and subsequently with corporate network; the essential assumption here is that all devices are assumed to be trusted; i.e. have been issued and are under control of the issuing entity (company), and authentication of mobile devices with security manager and corporate network, where some mobile devices come from third parties and do not have pre-installed authentication data (e.g., certificates).

The present invention offers many advantages over the prior art, establishing as it does a trustworthy communication relationship between mobile devices and corporate network, seamless and secure access to business applications, without the requirement for any pre-installed shared secret.

In particular, it firstly allows the establishment of trust among mobile client devices and between mobile client devices and corporate network and secure communication links between mobile client devices and between mobile devices and corporate networks.

Secondly, because of the mentioned trust and secure communication links mobile users may get access to corporate networks and distributed application running in said corporate network anytime from anywhere.

Thirdly, no pre-installed shared secret is required on any mobile device so that any device that is new to the set of trusted mobile devices can get included, if only able to participate in the communication.

Once initialized with the user's credentials, the security manager can generate new credentials which are transferred and installed on previously authenticated or unauthenticated devices.

Overall, the present invention provides a transparent security environment made out of an arbitrary set of devices that enables secure mobile distributed applications.

The present invention is well suited to support mobile business applications, for example a "pervasive salesperson" using a variety of mobile devices, and requiring strong authentication of user, mobile devices and corporate business applications, identity verification, key negotiation and establishment.

All of the above described embodiments relate to the central inventive concept of the invention, and it will be clear to the skilled person that any feature or detail described in relation to any one of these embodiments can be incorporated into any other embodiment.

## Claims

1. A method of establishing secure network communications between a client and a server, comprising the steps of:
establishing a trust relationship between a smart card and the client, including transmitting a client certificate (123) associated with the client from the client to the smart card and establishing the validity thereof at the smart card;
generating a card certificate (124) at the smart card and transmitting the card certificate to the client from the smart card after establishing the trust relationship;
transmitting the card certificate (124) from the client to the server;
establishing the validity of the card certificate (124) at the server;
transmitting a session key (131) from the server to the client; and
carrying out further network communications (12) between the client and the server using the session key(131).

2. The method of claim 1, comprising the further step of establishing a trust relationship between the server and the smart card prior to generating the card certificate.

3. The method of claim 2, wherein the step of establishing a trust relationship between the server and smart card comprises the further steps of:
transmitting an identifier (122) associated with the smart card from the smart card to the server; and
establishing the validity of the identifier (122) at the server.

4. The method of claim 3, wherein the step of establishing a trust relationship between the server and smart card comprises the further steps of:
transmitting encryption data (132) associated with the server from the server to the smart card; and
carrying out further network communications (11) between the server and the smart card using the encryption data (132).

5. The method of claim 3 or 4, wherein the step of establishing a trust relationship between the server and smart card comprises the further steps of:
transmitting an identifier (121) associated with the server from the server to the smart card; and
establishing the validity of the identifier (121) at the smart card.

6. The method of at least one of the preceding claims, wherein at least one of the steps of:
establishing a trust relationship between the server and the smart card;
establishing a trust relationship between the smart card and the client; and
establishing a trust relationship between the client and the server;
is repeated.

7. The method according to claim 6, wherein the repetition of the at least one step is carried out in predetermined intervals or at random intervals.

8. The method of at least one of the preceding claims, comprising the further step of: establishing a secure channel between the smart card and the client.

9. The method of claim 8, wherein the secure channel is established using one of an Internet Key Exchange protocol, Diffie-Hellman, and Bluetooth device pairing.

10. A communications network for secure network communications between a client and a server comprising,
a client, provided with a first client mediator and a second client mediator;
a server, provided with a first server mediator and a second server mediator;
a smart card for establishing a trust relationship between the smart card and the client including receiving a client certificate (123) associated with the client from the client and establishing the validity thereof;
the smart card further being adapted to generate a card certificate, and for transmitting it to the second client mediator after establishing the trust relationship;
wherein the second client mediator and the second server mediator are adapted to establish a trust relationship between the client and the server, wherein the adaptations to the second client mediator comprise the second client mediator being adapted to:
receive the card certificate (124) from the smart card;
transmit the card certificate (124) to the server for validation;
receive a session key (131) from the server; and to
carry out secure network communications (12) with the server using the session key (131);
and wherein the adaptations to the second server mediator comprise the second server mediator being adapted to:
establish the validity of the card certificate;
transmit the session key to the client; and to
carry out further network communications (12) with the client using the session key (131).

11. The communications network of claim 10, wherein the first server mediator and the smart card are adapted to establish a trust relationship between the server and the smart card.

12. The communications network of claim 11, wherein the first server mediator and the smart card are adapted to establish a trust relationship between the server and the smart card
prior to generating the card certificate.

13. The communications network of claim 11 or 12, wherein
the smart card is adapted to transmit an identifier (122) associated with the smart card to the server; and
the first server mediator is adapted to establish the validity of the identifier (122) at the server.

14. The communications network of claim 13, wherein the first server mediator is adapted to transmit a second encryption data (132) associated with the server from the server to the smart card; and to carry out further network communications (11) with the smart card using the second encryption data (132).

15. The communications network of claim 14, wherein:
the server is adapted to transmit an identifier (121) associated with the server to the smart card; and
the smart card is adapted to establish the validity of the identifier (121).

16. The communications network of at least one of claims 10 to 15, wherein the server, the smart card and the client are adapted to repeatedly
establish a trust relationship between the server and the smart card;
establish a trust relationship between the smart card and the client; and
establish a trust relationship between the client and the server.

17. The communications network of claim 16, wherein the server, the smart card and the client are adapted to carry out the repetition of at least one of establishing a trust relationship between the server and the smart card, establishing a trust relationship between the smart card and the client and establishing a trust relationship between the client and the server in predetermined intervals or at random intervals.

18. The communications network of any of claims 10 to 17, wherein said smart card is adapted to establish a secure channel with the client.

## Patentansprüche

1. Verfahren zum Einrichten sicherer Netzwerkkommunikationen zwischen einem Client und einem Server, mit den Schritten zum:
Einrichten einer Vertrauensbeziehung zwischen einer Chipkarte und dem Client, mit Übertragen eines mit dem Client verknüpften Client-Zertifikates (123) von dem Client an die Chipkarte und Einrichten der Gültigkeit davon bei der Chipkarte;
Erzeugen eines Kartenzertifikates (124) bei der Chipkarte und Übertragen des Kartenzertifikates an den Client von der Chipkarte nach Einrichten der Vertrauensbeziehung;
Übertragen des Kartenzertifikates (124) von dem Client an den Server;
Einrichten der Gültigkeit des Kartenzertifikates (124) bei dem Server;
Übertragen eines Sitzungsschlüssels (131) von dem Server an den Client; und
Ausführen weiterer Netzwerkkommunikationen (12) zwischen dem Client und dem Server mit Verwenden des Sitzungsschlüssels (131).

2. Verfahren gemäß Anspruch 1, den weiteren Schritt umfassend zum Einrichten einer Vertrauensbeziehung zwischen dem Server und der Chipkarte vor Erzeugen des Kartenzertifikates.

3. Verfahren gemäß Anspruch 2, wobei der Schritt zum Einrichten einer Vertrauensbeziehung zwischen dem Server und der Chipkarte die weiteren Schritte umfasst zum:
Übertragen eines mit der Chipkarte verknüpften Identifizierers (122) von der Chipkarte an den Server; und
Einrichten der Gültigkeit des Identifizierers (122) bei dem Server.

4. Verfahren gemäß Anspruch 3, wobei der Schritt zum Einrichten einer Vertrauensbeziehung zwischen dem Server und der Chipkarte die weiteren Schritte umfasst zum:
Übertragen von mit dem Server verknüpften Verschlüsselungsdaten (132) von dem Server an die Chipkarte; und
Ausführen weiterer Netzwerkkommunikationen (11) zwischen dem Server und der Chipkarte mit Verwenden der Verschlüsselungsdaten (132).

5. Verfahren gemäß Anspruch 3 oder 4, wobei der Schritt zum Einrichten einer Vertrauensbeziehung zwischen dem Server und der Chipkarte die weiteren Schritte umfasst zum:
Übertragen eines mit dem Server verknüpften Identifizierers (121) von dem Server an die Chipkarte; und
Einrichten der Gültigkeit des Identifizierers (121) bei der Chipkarte.

6. Verfahren gemäß einem der vorangegangenen Ansprüche, wobei wenigstens einer der Schritte zum:
Einrichten einer Vertrauensbeziehung zwischen dem Server und der Chipkarte;
Einrichten einer Vertrauensbeziehung zwischen der Chipkarte und dem Client; und
Einrichten einer Vertrauensbeziehung zwischen dem Client und dem Server;
wiederholt wird.

7. Verfahren gemäß Anspruch 6, wobei die Wiederholung des wenigstens einen Schrittes in vorbestimmten Intervallen oder bei zufälligen Intervallen ausgeführt wird.

8. Verfahren gemäß einem der vorangegangenen Ansprüche, den weiteren Schritt umfassend zum:
Einrichten eines sicheren Kanals zwischen der Chipkarte und dem Client.

9. Verfahren gemäß Anspruch 8, wobei der sichere Kanal eingerichtet wird mit Verwenden von einem von einem Internet Key Exchange Protokoll, Diffie-Hellman und Bluetooth-Gerät-Paarung.

10. Kommunikationsnetzwerk für sichere Netzwerkkommunikationen zwischen einem Client und einem Server, mit:
einem Client, der mit einem ersten Client-Vermittler und einem zweiten Client-Vermittler bereitgestellt ist;
einem Server, der mit einem ersten Server-Vermittler und einem zweiten Server-Vermittler bereitgestellt ist;
einer Chipkarte zum Einrichten einer Vertrauensbeziehung zwischen der Chipkarte und dem Client, mit einem Empfangen eines mit dem Client verknüpften Client-Zertifikates (123) von dem Client und Einrichten der Gültigkeit davon;
wobei die Chipkarte ferner ausgebildet ist zum Erzeugen eines Kartenzertifikates und zum Übertragen davon an den zweiten Client-Vermittler nach Einrichten der Vertrauensbeziehung;
wobei der zweite Client-Vermittler und der zweite Server-Vermittler ausgebildet sind zum Einrichten einer Vertrauensbeziehung zwischen dem Client und dem Server, wobei die Anpassungen an den zweiten Client-Vermittler umfassen, dass der zweite Client-Vermittler ausgebildet ist zum:
Empfangen des Kartenzertifikates (124) von der Chipkarte;
Übertragen des Kartenzertifikates (124) an den Server zur Validierung;
Empfangen eines Sitzungsschlüssels (131) von dem Server; und
Ausführen sicherer Netzwerkkommunikationen (12) mit dem Server mit Verwenden des Sitzungsschlüssels (131) ;
und wobei die Anpassungen an den zweiten Server-Vermittler umfassen, dass der zweite Server-Vermittler ausgebildet ist zum:
Einrichten der Gültigkeit des Kartenzertifikates;
Übertragen des Sitzungsschlüssels an den Client; und
Ausführen weiterer Netzwerkkommunikationen (12) mit dem Client mit Verwenden des Sitzungsschlüssels (131).

11. Kommunikationsnetzwerk gemäß Anspruch 10, wobei der erste Server-Vermittler und die Chipkarte ausgebildet sind zum Einrichten einer Vertrauensbeziehung zwischen dem Server und der Chipkarte.

12. Kommunikationsnetzwerk gemäß Anspruch 11, wobei der erste Server-Vermittler und die Chipkarte ausgebildet sind zum Einrichten einer Vertrauensbeziehung zwischen dem Server und der Chipkarte vor Erzeugen des Kartenzertifikates.

13. Kommunikationsnetzwerk gemäß Anspruch 11 oder 12, wobei
die Chipkarte ausgebildet ist zum Übertragen eines mit der Chipkarte verknüpften Identifizierers (122) an den Server; und
der erste Server-Vermittler ausgebildet ist zum Einrichten der Gültigkeit des Identifizierers (122) bei dem Server.

14. Kommunikationsnetzwerk gemäß Anspruch 13, wobei der erste Server-Vermittler ausgebildet ist zum Übertragen mit dem Server verknüpfter, zweiter Verschlüsselungsdaten (132) von dem Server an die Chipkarte; und zum Ausführen von weiteren Netzwerkkommunikationen (11) mit der Chipkarte mit Verwenden der zweiten Verschlüsselungsdaten (132).

15. Kommunikationsnetzwerk gemäß Anspruch 14, wobei:
der Server ausgebildet ist zum Übertragen eines mit dem Server verknüpften Identifizierers (121) an die Chipkarte; und
die Chipkarte ausgebildet ist zum Einrichten der Gültigkeit des Identifizierers (121).

16. Kommunikationsnetzwerk gemäß einem der Ansprüche 10 bis 15, wobei der Server, die Chipkarte und der Client ausgebildet sind zum wiederholten
Einrichten einer Vertrauensbeziehung zwischen dem Server und der Chipkarte;
Einrichten einer Vertrauensbeziehung zwischen der Chipkarte und dem Client; und
Einrichten einer Vertrauensbeziehung zwischen dem Client und dem Server.

17. Kommunikationsnetzwerk gemäß Anspruch 16, wobei der Server, die Chipkarte und der Client ausgebildet sind zum Ausführen der Wiederholung wenigstens von einem von einem Einrichten einer Vertrauensbeziehung zwischen dem Server und der Chipkarte, einem Einrichten einer Vertrauensbeziehung zwischen der Chipkarte und dem Client und einem Einrichten einer Vertrauensbeziehung zwischen dem Client und dem Server in vorbestimmten Intervallen oder bei zufälligen Intervallen.

18. Kommunikationsnetzwerk gemäß einem der Ansprüche 10 bis 17, wobei die Chipkarte ausgebildet ist zum Einrichten eines sicheren Kanals mit dem Client.

## Revendications

1. Procédé d'établissement de communications sécurisées en réseau entre un client et un serveur, comprenant les étapes consistant à :
établir une relation de confiance entre une carte à puce et le client, comprenant la transmission d'un certificat de client (123) associé au client depuis le client vers la carte à puce et l'établissement de la validité de celui-ci à la carte à puce ;
générer un certificat de carte (124) à la carte à puce et transmettre le certificat de carte vers le client depuis la carte à puce après établissement de la relation de confiance ;
transmettre le certificat de carte (124) depuis le client vers le serveur ;
établir la validité du certificat de carte (124) au serveur;
transmettre une clé de session (131) depuis le serveur vers le client ; et
effectuer des communications ultérieures en réseau (12) entre le client et le serveur en utilisant la clé de session (131).

2. Procédé de la revendication 1, comprenant en outre l'étape consistant à établir une relation de confiance entre le serveur et la carte à puce avant de générer le certificat de carte.

3. Procédé de la revendication 2, dans lequel l'étape d'établissement d'une relation de confiance entre le serveur et la carte à puce comprend en outre les étapes consistant à :
transmettre un identificateur (122) associé à la carte à puce depuis la carte à puce vers le serveur ; et
établir la validité de l'identificateur (122) au serveur.

4. Procédé de la revendication 3, dans lequel l'étape d'établissement d'une relation de confiance entre le serveur et la carte à puce comprend en outre les étapes consistant à :
transmettre des données de codage (132) associées au serveur depuis le serveur vers la carte à puce ; et
effectuer des communications ultérieures en réseau (11) entre le serveur et la carte à puce en utilisant les données de codage (132).

5. Procédé de la revendication 3 ou 4, dans lequel l'étape d'établissement d'une relation de confiance entre le serveur et la carte à puce comprend en outre les étapes consistant à :
transmettre un identificateur (121) associé au serveur depuis le serveur vers la carte à puce ; et
établir la validité de l'identificateur (121) à la carte à puce.

6. Procédé d'au moins une des revendications précédentes, dans lequel au moins une des étapes consistant à :
établir une relation de confiance entre le serveur et la carte à puce ;
établir une relation de confiance entre la carte à puce et le client ; et
établir une relation de confiance entre le client et le serveur ;
est répétée.

7. Procédé selon la revendication 6, dans lequel la répétition de l'étape au moins concernée est effectuée dans des intervalles prédéterminés ou à des intervalles aléatoires.

8. Procédé d'au moins une des revendications précédentes, comprenant en outre l'étape consistant à : établir un canal sécurisé entre la carte à puce et le client.

9. Procédé de la revendication 8, dans lequel le canal sécurisé est établi en utilisant un des systèmes parmi un protocole Internet d'échange de clé, un schéma Diffie-Hellman, et un pairage de dispositifs à technologie Bluetooth.

10. Réseau de communications destiné à des communications sécurisées en réseau entre un client et un serveur comprenant,
un client, muni d'un premier médiateur de client et un second médiateur de client ;
un serveur, muni d'un premier médiateur de serveur et un second médiateur de serveur ;
une carte à puce destinée à établir une relation de confiance entre la carte à puce et le client comprenant la réception d'un certificat de client (123) associé au client venant du client et l'établissement de la validité de celui-ci ;
la carte à puce étant en outre adaptée pour générer un certificat de carte, et pour le transmettre vers le second médiateur de client après établissement de la relation de confiance ;
dans lequel le second médiateur de client et le second médiateur de serveur sont adaptés pour établir une relation de confiance entre le client et le serveur, dans lequel les adaptations apportées au second médiateur de client comprennent le fait que le second médiateur de client est adapté pour :
recevoir le certificat de carte (124) venant de la carte à puce ;
transmettre le certificat de carte (124) vers le serveur pour validation ;
recevoir une clé de session (131) venant du serveur ; et pour
effectuer des communications sécurisées en réseau (12) avec le serveur en utilisant la clé de session (131) ;
et dans lequel les adaptations apportées au second médiateur de serveur comprennent le fait que le second médiateur de serveur est adapté pour :
établir la validité du certificat de carte ;
transmettre la clé de session au client, et pour
effectuer des communications ultérieures en réseau (12) avec le client en utilisant la clé de session (131).

11. Réseau de communications de la revendication 10, dans lequel le premier médiateur de serveur et la carte à puce sont adaptés pour établir une relation de confiance entre le serveur et la carte à puce.

12. Réseau de communications de la revendication 11, dans lequel le premier médiateur de serveur et la carte à puce sont adaptés pour établir une relation de confiance entre le serveur et la carte à puce avant de générer le certificat de carte.

13. Réseau de communications de la revendication 11 ou 12, dans lequel
la carte à puce est adaptée pour transmettre un identificateur (122) associé à la carte à puce vers le serveur ; et
le premier médiateur de serveur est adapté pour établir la validité de l'identificateur (122) au serveur.

14. Réseau de communications de la revendication 13, dans lequel le premier médiateur de serveur est adapté pour transmettre des secondes données de codage (132) associées au serveur depuis le serveur vers la carte à puce ; et pour effectuer des communications ultérieures en réseau (11) avec la carte à puce en utilisant les secondes données de codage (132).

15. Réseau de communications de la revendication 14, dans lequel :
le serveur est adapté pour transmettre un identificateur (121) associé au serveur vers la carte à puce ; et
la carte à puce est adaptée pour établir la validité de l'identificateur (121).

16. Réseau de communications d'au moins une des revendications 10 à 15, dans lequel le serveur, la carte à puce et le client sont adaptés pour, d'une manière répétée,
établir une relation de confiance entre le serveur et la carte à puce ;
établir une relation de confiance entre la carte à puce et le client ; et
établir une relation de confiance entre le client et le serveur.

17. Réseau de communications de la revendication 16, dans lequel le serveur, la carte à puce et le client sont adaptés pour effectuer la répétition d'au moins une des actions consistant à établir une relation de confiance entre le serveur et la carte à puce, établir une relation de confiance entre la carte à puce et le client et établir une relation de confiance entre le client et le serveur dans des intervalles prédéterminés ou à des intervalles aléatoires.

18. Réseau de communications de l'une quelconque des revendications 10 à 17, dans lequel ladite carte à puce est adaptée pour établir un canal sécurisé avec le client.
